# DEMANDE DE BREVET EUROPEEN

(11) **EP 4 116 880 A1**
(43) Date de publication de la demande: **11.01.2023**
(21) Numéro de dépôt: 22183001.1
(22) Date de dépôt: 05.07.2022
(51) Int. Cl.: G06K 19/077

(54) **DISPOSITIF COMPRENANT UNE ÉTIQUETTE RFID UTILISABLE DANS UN FOUR À MICRO-ONDES ET RÉCIPIENT OU EMBALLAGE POURVU D'UN TEL DISPOSITIF**

(30) Priorité: 10.07.2021 FR 2107527
(71) Demandeur: Yesitis, 63000 Clermont Ferrand (FR)
(72) Inventeur: PANTALONI, Ghjuvan-Battisti, 20133 Ucciani (FR)
(74) Mandataire: Dennemeyer & Associates S.A.

(57) **Abrégé**

[L'invention concerne un dispositif (E) comprenant une étiquette RFID ()caractérisée en ce que ladite étiquette (1) est équipée sur au moins une (12) de ses faces (12, 13) une couche (14, 14A) d'un matériau de protection, ledit matériau étant à base de silicone et ayant une permittivité diélectrique supérieure à au moins trois fois la permittivité diélectrique de l'air et en ce que ladite couche (14, 14A) de matériau a une épaisseur d'au moins 6 millimètres. L'invention concerne également un récipient ou emballage équipé d'un tel dispositif.

## Description

La présente invention concerne un dispositif comprenant une étiquette RFID utilisable au moins dans un four à micro-ondes. L'invention concerne également un récipient ou emballage pourvu d'au moins un tel dispositif.

Une étiquette RFID, selon l'abréviation en anglais pour Radio Frequency IDentification, est un dispositif de stockage et de transmission de données à distance par ondes radio, à une fréquence définie. Les données sont stockées sur une puce électronique fixée sur un support, généralement de faible épaisseur, qui comprend également une antenne assurant les échanges de données entre la puce électronique et un lecteur distant dédié. Les étiquettes RFID ont des dimensions telles qu'elles peuvent être fixées ou incorporées dans de nombreux objets ou produits, assurant ainsi l'identification, le suivi et/ou la fourniture d'informations complémentaires en relation avec ces derniers. Du fait de leur facilité d'implantation et de leurs dimensions, les étiquettes RFID sont présentes sur divers objets ou produits susceptibles de se trouver dans des environnements contraignants ou susceptibles d'endommager l'étiquette RFID.

En particulier, les étiquettes RFID présentes sur des emballages ou récipients pour produits alimentaires ou autres peuvent avoir à supporter des micro-ondes émises par un four à micro-ondes, cela dans le cas d'une décongélation, d'une cuisson ou d'un réchauffage du produit contenu dans l'emballage ou le récipient. Dans un tel cas, les étiquettes RFID sont également soumises à des hautes températures, typiquement supérieures à 50°C. Afin de préserver les propriétés et le fonctionnement de l'étiquette RFID, et donc assurer le stockage et la transmission des données entre l'étiquette RFID et le lecteur, il convient que l'étiquette RFID ne soit pas, ou peu, affectée par les micro-ondes émises par un four à micro-ondes. Pour mémoire, les micro-ondes sont des ondes électromagnétiques qui se situent entre les ondes radioélectriques et le rayonnement infrarouge. Typiquement dans un four à micro-ondes, leurs longueurs d'onde est de 12,5 cm et leurs fréquences de 2,45 GHz, cela pour des puissances de four à micro-ondes généralement comprises entre 600W et 2000W, couramment rencontrées pour des appareils à usage domestique. Dans un four à micro-ondes, on génère un champ électromagnétique de forte puissance qui détruit les étiquettes RFID quelle que soit la bande de fréquence des étiquettes RFID. Pour remédier à cela, on connait diverses solutions de blindage de l'étiquette RFID, au niveau de la puce électronique et/ou au niveau de l'antenne. Parmi les solutions connues, on peut citer EP-A-3 563 299 qui décrit une solution de blindage sur la puce électronique, l'antenne pouvant se fracturer lorsque la température augmente. US-B-10 311 355 divulgue un blindage capacitif pour l'antenne, le blindage permettant d'évacuer l'énergie reçue par l'antenne sous forme de chaleur. US-A-2008 143 480 décrit une forme particulière, en polygone, de l'antenne qui confère à l'antenne une aire inférieure au 1/6eme de la longueur d'onde du four à micro-ondes. WO-A-2021 079 265 divulgue un blindage sur un côté du support portant l'étiquette RFID, afin de limiter la tension dans l'espace défini par l'antenne. La solution fournie par WO-A-2021 072 966 consiste en une antenne en deux parties, entre lesquelles on définit un pont à faible impédance pour les micro-ondes. EP-A-3 136 298 a pour objet une étiquette RFID comprenant une couche de protection supérieure et inférieure à base de silicone. WO-A-2009/119828 concerne un émetteur récepteur sans contact, donc cela concerne aussi une étiquette RFID, comprenant du silicone comme élément de protection, en particulier contre la chaleur. US-A-2012/298758 décrit une méthode d'implantation d'objets, à savoir des étiquettes RFID dans des objets contenant du métal. Les étiquettes RFID sont encapsulées dans un revêtement résistant à la chaleur qui peut comporter du silicone. KR-B-101 508 765 divulgue une étiquette RFID pourvue d'une couche de blindage formée par une couche de métal et une couche en résine résistante à la chaleur. Ces diverses solutions sont plus ou moins complexes à mettre en oeuvre.

L'invention propose une solution permettant, de façon simple et à faible coût, de protéger l'ensemble de l'étiquette RFID, donc l'antenne et la puce électronique, afin de rendre l'étiquette utilisable au moins dans un four à micro-ondes.

A cet effet, l'invention a pour objet un dispositif comprenant une étiquette RFID comportant une antenne et une puce RFID fixées sur un support plan, ladite étiquette comprenant sur au moins une de ses faces une couche d'un matériau de protection couvrant l'antenne et la puce électronique, ledit matériau étant à base de silicone et ayant une permittivité diélectrique supérieure à au moins trois fois la permittivité diélectrique de l'air et ladite couche de matériau ayant une épaisseur d'au moins 6 millimètres, caractérisé en ce que l'étiquette RFID est pourvue sur une face d'une couche de matériau à base de silicone et sur la face opposée d'une couche d'un matériau choisi parmi une couche d'un matériau à base de silicone ou une couche d'un matériau métallique électriquement conducteur ayant une épaisseur d'au moins trois fois la profondeur de pénétration des micro-ondes à 2,45GHz dans le matériau métallique.

La permittivité diélectrique du silicone constitutif majoritaire du matériau, donc la réponse du silicone à un champ électrique, est de l'ordre de quatre, soit un matériau plus isolant électriquement que l'air qui est généralement le milieu de propagation initiale des micro-ondes, notamment dans un four à micro-ondes. On réalise ainsi un changement de milieu entre l'air et le matériau à base de silicone d'autant plus important qu'à l'épaisseur minimale choisie, l'étiquette RFID n'est pas ou peu atteinte par les micro-ondes ayant la fréquence couramment rencontrée dans un four à micro-ondes, de l'ordre de 2,45GHz, cela tout en permettant à l'étiquette RFID de rester fonctionnelle à la fréquence de fonctionnement de l'étiquette RFID qui est de l'ordre de 868MHz. En utilisant du silicone de type alimentaire, il est possible d'incorporer l'étiquette RFID ainsi protégée à un récipient ou un emballage recevant un produit alimentaire.

Selon des aspects avantageux mais non obligatoires de l'invention, un tel dispositif peut comprendre une ou plusieurs des caractéristiques suivantes :

Les deux faces de l'étiquette RFID comprennent un matériau à base de silicone solidaire desdites faces ayant une épaisseur d'au moins 6 millimètres.

Le matériau à base de silicone est formé de silicone de qualité alimentaire.

Le matériau à base de silicone a une permittivité de 4.

Le matériau métallique est du cuivre configuré en plaque mince.

Le matériau est de l'aluminium configuré en plaque mince.

La plaque de matériau métallique a une épaisseur de dix fois la profondeur de pénétration des micro-ondes à 2,45GHz dans le matériau métallique.

La couche de matériau métallique est solidaire de la face du support plan de l'étiquette RFID qui définit la face du dispositif destinée à être en contact avec un récipient ou emballage.

L'invention concerne également un récipient ou un emballage pourvu d'au moins un dispositif conforme à une quelconque des caractéristiques précédentes.

Selon des aspects avantageux mais non obligatoires de l'invention, un tel récipient ou emballage peut comprendre une ou plusieurs des caractéristiques suivantes :
Au moins un dispositif comprenant une étiquette RFID pourvue sur une face d'une couche de matériau à base de silicone et sur la face opposée d'une couche d'un matériau choisi parmi une couche d'un matériau à base de silicone ou une couche d'un matériau métallique électriquement conducteur ayant une épaisseur d'au moins trois fois la profondeur de pénétration des micro-ondes à 2,45GHz dans le matériau métallique est positionné sur une paroi du récipient ou de l'emballage orientée selon la hauteur du récipient ou de l'emballage.

L'invention sera mieux comprise et d'autres avantages de celle-ci apparaitront plus clairement à la lecture de la description qui va suivre, donnée uniquement à titre d'exemple non limitatif et faite en référence aux dessins annexés dans lesquels:
[Fig.1] est une vue simplifiée, de dessus, d'une étiquette RFID conforme à un mode de réalisation de l'invention,
[Fig.2] est une vue simplifiée, à une autre échelle, en perspective et en éclaté partiel, d'un four à micro-ondes et de ses éléments constitutifs,
[Fig.3] est une vue de côté, à une autre échelle, d'une étiquette RFID conforme à un mode de réalisation de l'invention et
[Fig.4] est une vue de côté, à une autre échelle, d'une étiquette RFID conforme à un autre mode de réalisation de l'invention.

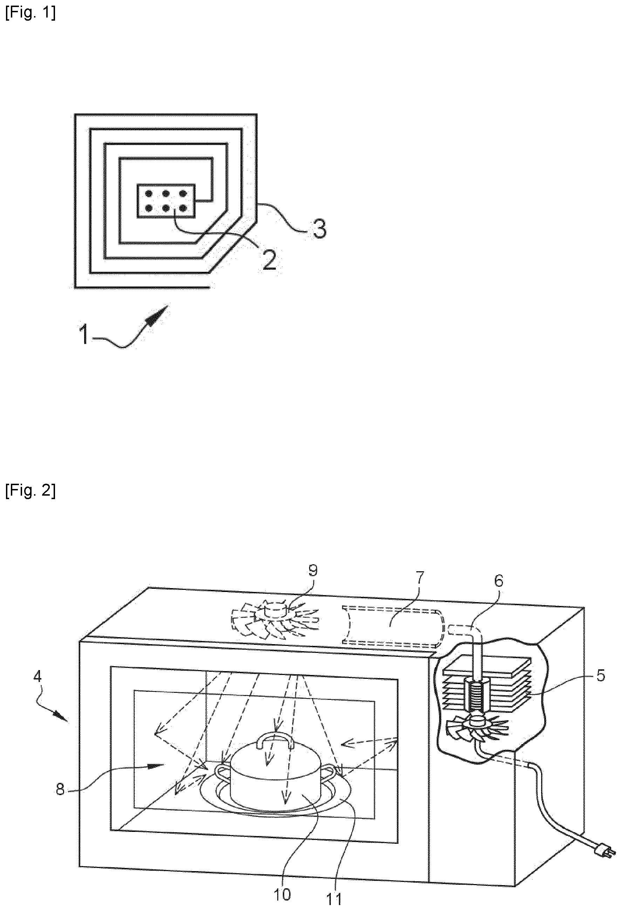

La figure 1 illustre, de manière simplifiée, une étiquette RFID 1 telle que couramment rencontrée. Une telle étiquette 1 comprend une puce électronique 2 sur laquelle sont stockées des informations relatives au produit ou à l'objet qui sera associé à l'étiquette 1. La puce 2 comprend également des organes de communication avec un lecteur distant. La transmission des informations entre l'étiquette 1 et un lecteur, non illustré pour plus de lisibilité, s'effectue par voie hertzienne, via une antenne 3. L'antenne 3 est formée par un élément filaire de type dipôle fixée par une extrémité à la puce 2. En variante, l'antenne est configurée en spirale. Les éléments constitutifs 2 et 3 de l'étiquette 1 sont de faible épaisseur et avantageusement fixés sur un support plan, de type feuille et inertes vis à vis de la puce 2 ou de l'antenne3. Ainsi une étiquette 1 a des dimensions, en particulier son épaisseur, permettant son montage de manière discrète sur les produits ou objets, sans modifier sensiblement les dimensions nominales du produit ou de l'objet. A titre d'exemple, une étiquette RFID a généralement une forme rectangulaire de 15 à 25 mm de large pour 30 à 80 mm de long, son épaisseur étant comprise entre 0,5 mm et 1,5 mm.

Une étiquette 1 est destinée, par exemple, à équiper un emballage ou un récipient adapté pour être en contact alimentaire. La caractéristique « contact alimentaire » d'un objet signifie que le matériau dont il est constitué répond à des exigences réglementaires et/ou normatives garantissant qu'il n'y a pas de risque de toxicité, vis-à-vis d'un être humain ou d'un animal, induite par l'objet pour des aliments, des boissons, des médicaments ou d'autres produits susceptibles d'être ingérés par un être vivant et qui sont en contact avec l'objet ,cela dans des conditions normales d'utilisation de l'objet. Lorsque l'emballage ou le récipient pourvu de l'étiquette 1 contient des aliments préparés ou des plats cuisinés, il est fréquent que l'utilisateur décongèle, réchauffe ou finit la cuisson des aliments préparés ou des plats cuisinés. Outre la possibilité de sortir les aliments ou plats de l'emballage ou du récipient, l'utilisateur a également la possibilité de mettre directement le récipient ou emballage dans un appareil de chauffage, pour autant que l'emballage ou le récipient soit adapté à un tel usage. Dans ce cas, l'emballage ou le récipient est à base de carton, papier de cuisson, papier sulfurisé, plastique, bois ou autre en fonction de l'appareil de cuisson qui peut être soit un four de cuisine soit, généralement et préférentiellement, un four à micro-ondes.

Lorsque la décongélation, la cuisson ou le réchauffage est effectué dans un four à micro-ondes cela implique certaines contraintes du fait du fonctionnement de ce type de four. Dans un four à micro-ondes tel le four 4 schématiquement illustré à la figure 2, un magnétron 5 formé de plusieurs lamelles aimantées produit un champ magnétique à très haute fréquence, à savoir 2,450 GHz. Une antenne 6 collecte le champ magnétique émis par le magnétron 5, le dirige vers un guide d'ondes 7. Les ondes sont envoyées dans le volume utile 8 du four 4 par l'intermédiaire d'un brasseur d'ondes 9 qui assure la dispersion des ondes dans le volume 8. Les parois métalliques délimitant le volume 8 sont métalliques et renvoient, par rebond, les ondes en direction de l'intérieur du volume 8. Lors de leur passage dans le volume 8, les micro-ondes traversent la plupart des récipients et emballages non métalliques, ici représenté par le récipient 10, et les aliments ou produits qu'ils contiennent. L'eau étant le composé majoritaire des aliments et plus généralement de tout produit d'origine biologique, les micro-ondes obligent les molécules d"eau à s'orienter en direction du champ électrique tournant. Les molécules d'eau oscillent alors à la fréquence du champ magnétique, soit 2,45GHz, cette oscillation produit de la chaleur. Afin de repartir de manière homogène la chaleur dans le récipient 10, ce dernier est posé sur un plateau tournant 11. La vitesse de chauffage des aliments est déterminée par la puissance électrique du four à micro-ondes 4. Pour des fours 4 à usage domestique, les puissances sont généralement comprises entre 700W et 1200W.

Dans tous les cas, quelle que soit la puissance du four 4, le champ électromagnétique a une puissance telle qu'il génère des courants électriques de forte intensité en présence de matériaux conducteurs tels ceux constitutifs d'une étiquette RFID 1. Ces courants électriques intenses, outre un échauffement des matériaux constitutifs de l'étiquette 1, donnent lieu à des arcs électriques par effet de pointe au niveau des parties conductrices anguleuses de l'étiquette RFID 1, ce qui provoque une destruction rapide de cette dernière.

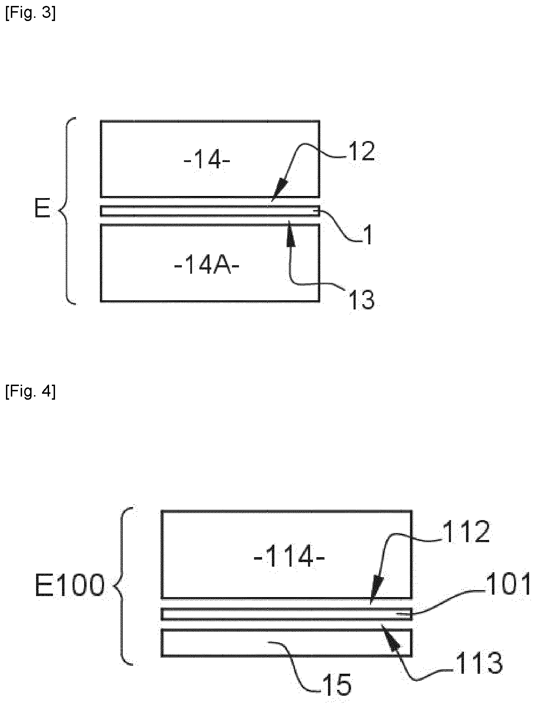

Outre une résistance aux micro-ondes lors du passage dans le four 4, une étiquette RFID 1 doit également pouvoir fonctionner aux fréquences UHF fréquemment utilisées, à savoir entre 860 MHz et 930 MHz, lors de son passage au four 4 ainsi qu'après, une fois le récipient 10 sorti du four 4. La solution mise en oeuvre par l'invention est schématiquement illustrée aux figures 3 et 4.

Cette solution réalise un changement dans le milieu de propagation des micro-ondes, ce qui a pour effet de modifier la vitesse de propagation des micro-ondes mais sans changer la fréquence. Or, plus la fréquence d'une onde est élevée et plus la profondeur de pénétration de l'onde dans le matériau sera faible. A titre d'exemple, dans un four à micro-ondes, il y a pénétration sur une profondeur d'environ 0,5 cm à 2 cm pour des produits non congelés à base de viandes, fruits ou légumes et sur une profondeur pouvant aller jusqu'à 30 cm pour des produits congelés, donc contenant plus d'eau.

Comme cela ressort des figures 3 et 4, l'étiquette RFID 1 comprend sur au moins une de ses faces 12 ou 13 une couche de matériau à base de silicone.

Selon le mode de réalisation du dispositif E de la figure 3, chaque couche 14, 14A est solidarisée à chaque face 12 respectivement, 13 de l'étiquette RFID 1, cela sur toute l'aire de chaque face 12, 13 afin de recouvrir complètement l'étiquette RFID 1 lorsque chaque couche 14, 14A est en place. Pour faciliter la lecture, ici les couches 14, 14A sont représentées comme étant non fixées aux faces 12, 13 de l'étiquette RFID 1.

Le matériau à base de silicone constitutif de chaque couche 14, 14A est, selon un mode de réalisation avantageux, du silicone alimentaire. Les silicones, ou polysiloxanes, sont des composés inorganiques formés d'une chaîne siliciumoxygène dans laquelle des groupes se fixent sur les atomes de silicium. On désigne sous l'appellation silicone alimentaire un élastomère en silicone, généralement bi-composant et réticulé par vulcanisation à température ambiante ou à chaud. Un silicone alimentaire est ainsi résistant aux hautes températures tout en évitant la migration de particules dans les aliments. Tout silicone alimentaire doit être conforme aux normes et/ou règlements en vigueur relatifs aux produits en contact alimentaire. Le silicone alimentaire se présente sous forme liquide ou solide, avec dans ce cas une malléabilité élevée, de type gomme. Il est ainsi aisé de le mettre en forme et de le fixer sur un support, par des techniques connues en soi, telle que le collage.

Dans tous les cas, le matériau à base de silicone utilisé doit avoir une permittivité supérieure à celle du milieu de propagation initiale des micro-ondes dans un four à micro-ondes 4. Par « initiale », on désigne le milieu traversé en premier par les micro-ondes, une fois dispersées par le brasseur d'ondes 9 et avant de pénétrer dans le récipient 10. II s'agit donc du volume d'air présent dans le volume 8 du four à micro-ondes 4. Un matériau ou milieu diélectrique, comme l'air, est un matériau ou milieu qui ne peut pas conduire le courant électrique. Néanmoins le comportement d'un diélectrique en présence d'un champ électrique est très variable. En effet, les atomes qui constituent le matériau ou le milieu peuvent interagir avec un champ électrique extérieur. Cette interaction induit une polarisation du matériau ou du milieu reliée au champ électrique extérieur donc à une orientation des atomes constitutifs du matériau ou du milieu sous l'action du champ électrique. La permittivité, plus précisément la permittivité diélectrique, est la propriété physique qui décrit la façon dont le champ électrique influe sur l'organisation des charges électriques dans un matériau ou milieu donné. La permittivité est adimensionnelle lorsqu'il s'agit de la permittivité relative ou constante diélectrique, par rapport à la permittivité du vide qui est défini comme étant de 1.

La permittivité de l'air est très proche de celle du vide et, par extension, également considérée comme étant égale à 1. En conséquence, la permittivité du milieu de propagation initiale est donc considérée comme étant égale à 1. Les silicones utilisés dans l'invention ont une permittivité voisine de 4, généralement comprise entre 3,2 et 4,7 selon la composition des silicones. Leurs comportement est donc très diffèrent de celui de l'air en présence de micro-ondes et également différent de celui des aliments ou produits placés dans le récipient 10 en vue de leur chauffage ou cuisson. Dans la mesure où ces aliments et produits comportent majoritairement de l'eau, ils sont de meilleurs conducteurs que l'air et le silicone. On réalise ainsi un changement significatif de milieu entre les aliments ou produits et le silicone qui génère une réflexion et une diffraction des micro-ondes. Le changement de milieu s'accompagne généralement d'un dégagement de chaleur par effet Joule, c'est-à-dire par échauffement de la matière lors du passage des micro-ondes. De ce fait, on diminue la quantité de micro-ondes susceptibles de traverser les couches 14, 14A à base de silicone ainsi que la quantité de chaleur reçue par le matériau à base de silicone.

Par ailleurs, avec une épaisseur minimale à respecter pour chaque couche 14, 14A, on limite la profondeur de pénétration des micro-ondes dans les couches 14, 14A, ce qui permet de limiter encore la sensibilité de l'étiquette RFID 1 aux micro-ondes. Il a été déterminé qu'une épaisseur minimale de 6 mm de chaque couche 14, 14A de matériau à base de silicone fixée sur les faces 12, 13 de l'étiquette 1 permet de rendre cette dernière quasiment invisible aux micro-ondes à la fréquence de 2,45GHz sans affecter de manière significative l'étiquette RFID 1 qui reste fonctionnelle à sa fréquence d'utilisation, soit ici à 868MHz. En associant une épaisseur minimale de chaque couche 14, 14A de matériau ayant une permittivité telle que l'on génère un changement du milieu de propagation des micro-ondes, on réalise un dispositif E qui optimise la protection de l'étiquette RFID 1 aux micro-ondes, cela sans modifier de manière significative les dimensions nominales de l'étiquette 1 ni la capacité du dispositif E à être fixé et/ou intégré à un récipient 10. L'épaisseur du dispositif E formé d'une étiquette RFID 1 pourvue sur ses deux faces 12, 13 d'une couche 14, 14A de matériau à base de silicone est ainsi comprise entre 13 mm et 15 mm. Selon le mode de réalisation illustré à la figure 3, les couches 14, 14A fixées sur les faces 12 et 13 de l'étiquette RFID 1 sont identiques, en composition et en épaisseur. En variante non illustrée, les couches 14, 14A fixées sur les faces 12 et 13 sont différentes, en épaisseur et /ou en composition. Ainsi, on adapte la couche de matériau 14 au support de la puce électronique 2 et de l'antenne 3 et/ou à une partie du récipient 10 sur lequel est fixé et/ou intégré le dispositif E.

Des essais ont été réalisés avec une étiquette RFID 1 répondant aux normes internationales EPC global Clas 1 Gen 2 ISO 18000-6C telle celle commercialisée par la société NXP sous la dénomination Ucode 8. Dans une telle étiquette 1, rectangulaire, la puce électronique 2 fait 48 mm par 22 mm pour 70 µm d'épaisseur, l'antenne 3 faisant 42 mm par 16 mm. Les dimensions totales nominales de l'étiquette RFID 1 sont de 50 mm par 22 mm pour une épaisseur voisine de celle de la puce électronique 2. Une fois équipée des deux couches de matériau 14,14A, le dispositif E fait 60 mm par 27 mm pour une épaisseur de 12,07 mm, soit une épaisseur proche des épaisseurs cumulées des couches 14, 14A de silicone. Le dispositif E a été fixé sur des récipients 10 de natures différentes mais fréquemment utilisés pour cuire ou réchauffer des aliments au four à micro-ondes, en l'espèce un bocal cylindrique en verre et une boite rectangulaire en plastique. Des essais avec un récipient rectangulaire en verre ont également été réalisés. Les récipients 10 ont été placés simultanément sur le plateau tournant 11 du four 4 à micro-ondes fonctionnant à une puissance de 850W.

Il a été constaté que la résistance aux micro-ondes du dispositif E est indépendante de la nature du récipient 10 et/ou de la forme de celui-ci, les comportements étant identiques pour la boite en plastique et pour le bocal ou la boite en verre. En revanche, la demanderesse a constaté que la position du dispositif E sur le récipient 10 affecte la résistance de l'étiquette RFID 1 aux micro-ondes. En particulier, lorsque le dispositif E est fixé sur une paroi verticale ou sur une paroi globalement verticale, donc sur une paroi orientée selon la hauteur du récipient 10, l'étiquette RFID 1 reste fonctionnelle, même avec des dégradations superficielles, pendant plus de 10 minutes dans le four à micro-ondes 4 lors d'un essai unitaire et pendant plus de 30 minutes en cumulé sur plusieurs essais. En revanche, lorsque le dispositif E est positionné sur une paroi horizontale ou globalement horizontale, donc une paroi orientée selon la zone d'appui du récipient 10 sur le plateau 11, l'étiquette RFID 1 reste fonctionnelle moins longtemps, à savoir pendant plus de 3 minutes en cumulé lors des essais dans le four 4. Il semble donc qu'il y ait une plus grande sensibilité aux micro-ondes lorsque ces derniers arrivent sur les couches 14, 14A de matériau selon une direction proche de 90° et/ou lorsque le dispositif E est au plus près du brasseur d'ondes 9, donc plus près de la source des micro-ondes. Ainsi au voisinage du brasseur 9, la dispersion de micro-ondes est faible et l'intensité des micro-ondes élevée.

Des essais effectués avec un dispositif E dont les couches 14 et 14A fixées sur l'étiquette RFID 1 étaient d'épaisseur différentes, respectivement 4 mm pour la couche 14 et 1 mm pour la couche 14A sur les faces 12, 13 ont donné des résultats identiques à ceux décrits précédemment lorsque le dispositif E est en place sur une paroi définissant la hauteur du récipient 10, soit une tenue de plus de 10 minutes dans le four 4 et de plus de 30 minutes en cumulé. Un tel dispositif E, avec des épaisseurs différenciées de couches 14, 14A a eu une résistance de l'étiquette RFID 1 d'une minute lorsqu'il est positionné sur une paroi orientée selon la zone d'appui du récipient 10 sur le plateau 11.

Des essais avec des dispositifs E comportant, pour l'un des couches 14, 14A de silicone d'épaisseurs identiques, à savoir 6 mm, et pour l'autre des épaisseurs différentes, à savoir 4 mm et 1 mm ont également été menés afin de connaitre la tenue de l'étiquette RFID 1 à la chaleur, indépendamment de la tenue aux micro-ondes, donc des essais dans un four de cuisine dit traditionnel. Comme pour les essais précédents, les étiquettes RFID 1 étaient positionnées sur des récipients 10, identiques à ceux utilisés pour les essais dans le four à micro-ondes 4. Les étiquettes RFID 1 des dispositifs E ont résistées 20 minutes, puis 30 minutes dans un four à 207°C, avec un temps de montée en température de 10 minutes, sachant que les dispositifs E étaient déjà présents dans le four lors de la montée en température. De manière surprenante, la demanderesse a noté que les étiquettes RFID 1, quelles que soient les épaisseurs des couches 14, 14A de silicone cessent de fonctionner, donc de recevoir et d'émettre des données, lorsque leur température atteint 80 °C, l'étiquette RFID 1 n'étant pas dégradée par ailleurs. Les étiquettes RFID 1 fonctionnent, c'est-à-dire reçoivent et émettent, de nouveau lorsque leur température repasse en dessous de 80°C, cela quel que soit les épaisseurs des couches 14, 14A.

Il apparait donc qu'une épaisseur minimale de 6 mm de matériau à base de silicone d'une permittivité diélectrique supérieure à au moins trois fois la permittivité diélectrique de l'air fixé sur chaque face 12, 13 de l'étiquette RFID 1 assure une protection optimale, de plusieurs minutes, voire dizaines de minutes si le dispositif E formé par l'étiquette RFID 1 avec les couches 14, 14A de matériau est positionné sur une paroi d'un récipient définissant la hauteur de ce dernier. Cette protection concerne autant l'effet des micro-ondes que l'effet de la chaleur sur l'étiquette RFID 1. Il est donc possible d'équiper des récipients ou emballages susceptibles d'être soumis à des micro-ondes dans un four à micro-ondes ou susceptible d'être chauffés dans un four de cuisine traditionnel, avec un dispositif E conforme à l'invention. Un récipient ou emballage ainsi équipé est utilisable dans un four à micro-ondes 4 ou un four de cuisine traditionnel sans que cela affecte de façon notable et durable le fonctionnement de l'étiquette RFID 1.

La figure 4 illustre un autre mode de réalisation de l'invention. Pour faciliter la lecture, les éléments communs avec ceux de la figure 3 ont les mêmes références augmentées de 100. Ici l'étiquette RFID 101 est pourvue d'une couche 114 de matériau à base de silicone, d'une épaisseur de 6 mm, positionnée sur la face 112 de l'étiquette RFID 101. La face opposée 113 est équipée d'une couche d'un métal conducteur 15, par exemple du cuivre ou un alliage à base de cuivre ou de l'aluminium ou un alliage à base d'aluminium. Le métal conducteur 15 permet d'atténuer le courant électrique engendré par l'étiquette RFID 101, plus particulièrement l'antenne lorsque cette dernière est soumise aux micro-ondes de fréquence élevée de 2,45GHz émises par un four à micro-ondes 4. Ceci est obtenu par effet de peau ou effet pelliculaire. Il s'agit d'un phénomène électromagnétique qui fait que, à fréquence élevée, le courant a tendance à ne circuler qu'en surface des conducteurs. Il en résulte une augmentation de la résistance du conducteur. Le courant ainsi généré en surface de la couche de métal conducteur 15 s'oppose au courant généré par l'antenne de l'étiquette RFID 101, donc de facto on obtient une atténuation de l'effet des micro-ondes sur l'étiquette RFID 101.

Dans ce mode de réalisation, la couche 114 de silicone définit la couche supérieure du dispositif E100, la couche de métal conducteur 15 étant en regard de la surface du récipient 10 sur laquelle est fixé le dispositif E100. La couche de métal, donc ici de cuivre ou d'aluminium, a une épaisseur d'au moins trois fois la profondeur de pénétration des micro-ondes à 2,45GHz dans le matériau métallique et elle est solidaire de la face du support plan de l'étiquette 101 qui définit la face du dispositif E100 destinée à être en contact avec un récipient ou un emballage. Avantageusement, La couche de matériau métallique, donc ici de cuivre ou d'aluminium, a une épaisseur de dix fois la profondeur de pénétration des micro-ondes à 2,45GHz dans le matériau métallique. Dans l'exemple, lorsque le matériau métallique est du cuivre ou de l'aluminium, l'épaisseur de la couche 15 est d'environ 16 µm, la profondeur de pénétration des micro-ondes à 2,45GHz étant respectivement de 1,36 µm et de 1,66 µm. En d'autres termes, la couche 15 forme l'organe de fixation du dispositif E100 sur un récipient 10 ou emballage. Dans ce mode de réalisation, le dispositif E100 associe un changement du milieu de propagation des micro-ondes avec un blindage électromagnétique atténuant le courant électrique engendré par l'étiquette RFID 101 soumise aux micro-ondes.

.Des essais effectués en plaçant un dispositif E100, fixé sur des récipients identiques à ceux utilisés pour les essais avec le dispositif E, dans un four 4 à micro-ondes d'une puissance de 850W ont montré que l'étiquette RFID 101 reste fonctionnelle plus de 10 minutes et, par cumul sur plusieurs essais, plus de 30 minutes, cela quelle que soit la zone du récipient 10 sur laquelle on positionne le dispositif E100.

En d'autre termes, avec une telle solution, on s'affranchit de la position du dispositif E100 sur le récipient 10, à la différence de la solution basée uniquement sur un changement de milieu.

Des essais de tenue au four classique ont également été effectués avec des récipients équipés du dispositif E100, cela dans les conditions similaires à celles des essais avec le dispositif E. Les résultats obtenus sont similaires, à savoir un arrêt du fonctionnement de la puce 2 au-delà de 80°C et un retour à la normale en deçà de 80°C.

Une autre solution envisagée mais non illustrée consiste à utiliser un guide d'ondes monté en lieu et place de l'antenne 3 et de la couche de métal conducteur 15. L'ensemble étant surmoulé ou disposé sur une couche de silicone. Afin de respecter la réglementation relative aux produits en contact avec les aliments il est préférable que le guide d'ondes soit surmoulé. Dans ce cas, l'épaisseur de la couche de silicone peut être réduite environ au tiers de l'épaisseur de la couche dans le dispositif E.

Le guide d'ondes permet de séparer l'onde en deux et de faire en sorte que, à la fréquence de 2,45GHz, lorsque les deux ondes se rejoignent en sortie du guide d'ondes, elles sont en opposition de phase et donc s'annulent. Un essai avec le guide d'ondes en place sur une étiquette RFID a montré une division par 100 de la puissance reçue sur l'étiquette RFID à 2,45GHz.

Néanmoins, lors d'un essai dans un four à micro-ondes 4 à 850W, l'étiquette RFID n'est restée fonctionnelle que 20 secondes, que ce soit lorsque le dispositif est fixé sur un récipient soit en verre soit en plastique. En effet, la puissance est tellement élevée et donc l'intensité du champ électrique tellement élevée que la tension de claquage de la puce électronique constitutive de l'étiquette RFID est atteinte rapidement. De plus, la température atteinte par l'étiquette RFID au bout de 20 secondes est voisine de 50°C. En d'autres termes, l'étiquette RFID chauffe très vite, les courants électriques surfaciques étant intenses. Des arcs électriques se sont par ailleurs formés pendant les essais dans le four à micro-ondes.

Il ressort donc que la solution décrite aux figures 3 et 4, utilisant au moins un changement dans le milieu de propagation avec au moins une couche 14, 14A ; 114 de matériau à base de silicone, si besoin associé à un blindage électromagnétique par effet de peau grâce à une couche de matériau métallique 15 est celle qui offre un compromis optimal entre coût, de mise en oeuvre et efficacité.

Ainsi, grâce à l'invention, on peut équiper des récipients 10 et emballages devant subir au moins un passage dans un four à micro-ondes 4 voire dans un four de cuisine classique avec au moins un dispositif E ou E100 comportant une étiquette RFID 1 ou 101 permettant d'échanger des données relatives à l'emballage ou au récipient et/ou au contenu de ceux-ci. Lorsque le récipient 10 ou l'emballage est équipé de plusieurs dispositifs E et/ou E100, dont au moins un dispositif E, avec deux couches 12, 13 de matériau à base de silicone, alors le dispositif E est positionné sur une paroi du récipient ou de l'emballage orientée selon la hauteur du récipient ou de l'emballage, ceci afin de limiter une arrivée orthogonale des micro-ondes sur le dispositif.

L'invention trouve ainsi son application dans le domaine de la restauration à domicile, le domaine de la restauration collective que ce soit en établissements de santé, de soin, de vacances, dans le domaine de la restauration en cantine scolaire ou professionnelle, dans la restauration aérienne, ferroviaire ou maritime. L'invention est également applicable dans le domaine pharmaceutique, chimique, agro-alimentaire.

## Revendications

1. Dispositif (E ; E100) comprenant une étiquette RFID (1 ; 101) comportant une antenne (2) et une puce RFID (3) fixées sur un support plan, ladite étiquette (1 ; 101) comprenant sur au moins une (12 ; 112) de ses faces (12, 13 ; 112 , 113) une couche (14, 14A ; 114) d'un matériau de protection couvrant l'antenne (3) et la puce électronique (2), ledit matériau étant à base de silicone et ayant une permittivité diélectrique supérieure à au moins trois fois la permittivité diélectrique de l'air et ladite couche (14, 14A ; 114) de matériau ayant une épaisseur d'au moins 6 millimètres, **caractérisé en ce que** l'étiquette RFID (1 ; 101) est pourvue sur une face (112) d'une couche (114) de matériau à base de silicone et sur la face opposée (113) d'une couche d'un matériau choisi parmi une couche d'un matériau à base de silicone ou une couche (15) d'un matériau métallique électriquement conducteur ayant une épaisseur d'au moins trois fois la profondeur de pénétration des micro-ondes à 2,45GHz dans le matériau métallique.

2. Dispositif selon la revendication 1, **caractérisé en ce que** les deux faces (12, 13) de l'étiquette RFID (1) comprennent un matériau à base de silicone solidaire desdites faces (12, 13) ayant une épaisseur d'au moins 6 millimètres.

3. Dispositif selon la revendication 1, **caractérisé en ce que** le matériau à base de silicone est formé de silicone de qualité alimentaire.

4. Dispositif selon la revendication 1, **caractérisé en ce que** le matériau à base de silicone a une permittivité de 4.

5. Dispositif selon la revendication 1, **caractérisé en ce que** le matériau métallique est du cuivre configuré en plaque (15) mince.

6. Dispositif selon la revendication 1, **caractérisé en ce que** le matériau est de l'aluminium configuré en plaque mince.

7. Dispositif selon la revendication 1, **caractérisé en ce que** la plaque (15) de matériau métallique a une épaisseur de dix fois la profondeur de pénétration des micro-ondes à 2,45GHz dans le matériau métallique.

8. Dispositif selon la revendication 1, **caractérisé en ce que** la couche (15) de matériau métallique est solidaire de la face du support plan de l'étiquette RFID (101) qui définit la face du dispositif (E100) destinée à être en contact avec un récipient (10) ou emballage.

9. Récipient (10) ou emballage pourvu d'au moins un dispositif (E ; E100) conforme à une quelconque des revendications précédentes.

10. Récipient (10) ou emballage selon la revendication 9, **caractérisé en ce qu'**au moins un dispositif (E) comprenant une étiquette RFID (1 ; 101) pourvue sur une face (112) d'une couche (114) de matériau à base de silicone et sur la face opposée (113) d'une couche d'un matériau choisi parmi une couche d'un matériau à base de silicone ou une couche (15) d'un matériau métallique électriquement conducteur ayant une épaisseur d'au moins trois fois la profondeur de pénétration des micro-ondes à 2,45GHz dans le matériau métallique est positionné sur une paroi du récipient ou de l'emballage orientée selon la hauteur du récipient ou de l'emballage.
